# EUROPÄISCHE PATENTSCHRIFT

(11) **EP 0 756 807 B1**
(45) Veröffentlichungstag und Bekanntmachung des Hinweises auf die Patenterteilung: **03.04.2002**
(21) Anmeldenummer: 96901477.8
(22) Anmeldetag: 19.02.1996
(51) Int. Cl.: H04Q 7/38

(54) **HIERARCHISCHES MOBILFUNKSYSTEM UND VERFAHREN ZUM WEITERREICHEN**
HIERARCHICAL MOBILE RADIO TELEPHONE SYSTEM AND A HANDOVER PROCESS
SYSTEME RADIOTELEPHONIQUE MOBILE ET PROCEDE DE TRANSFERT

(30) Priorität: 20.02.1995 DE 19505780
(43) Veröffentlichungstag der Anmeldung: 05.02.1997
(73) Patentinhaber: Lucent Technologies Inc., Murray Hill, New Jersey 07974 (US)
(72) Erfinder: MEYER, Klaus, D-90425 Nürnberg (DE)
(74) Vertreter: Buckley, Christopher Simon Thirsk
(86) Internationale Anmeldenummer: IB9600133
(87) Internationale Veröffentlichungsnummer: WO9626622

(56) Entgegenhaltungen:
- EP-A- 0 589 278
- EP-A- 0 692 920
- PROCEEDINGS OF THE VEHICULAR TECHNOLOGY CONFERENCE, STOCKHOLM, JUNE 8 - 10, 1994, Bd. 1, 8.Juni 1994, INSTITUTE OF ELECTRICAL AND ELECTRONICS ENGINEERS, Seiten 91-95, XP000496641 SUNG C W ET AL: "USER SPEED ESTIMATION AND DYNAMIC CHANNEL ALLOCATION IN HIERARCHICAL CELLULAR SYSTEM"

## Beschreibung

Die Erfindung betrifft ein Mobilfunksystem, eine Feststation und eine Steuereinrichtung für ein derartiges Mobilfunksystem sowie ein Verfahren zum Weiterreichen einer Verbindung.

Moderne zellulare Mobilfunksysteme werden in der Regel aus mehreren Funkfeststationen gebildet, wobei jede Funkfeststation mit einer bestimmten Anzahl von ortsveränderlichen Teilnehmerstationen (=Mobilstation) innerhalb eines bestimmten geografischen Bereichs in Verbindung stehen kann. Ein derartiger geografischer Bereich wird im folgenden auch als Funkversorgungsbereich oder Funkzelle bezeichnet. Die Funkversorgungsbereiche einzelner Funkfeststationen in dem Mobilfunksystem können dabei so groß sein, dass sie mehrere Funkversorgungsbereiche anderer Funkfeststationen überdecken. Dadurch können die betreffenden geografischen Bereiche von Funkzellen unterschiedlicher Größe mehrfach versorgt werden. Die Funkzellen oder Funkversorgungsbereiche können dabei entsprechend ihrer Größe der geografischen Bereiche zu einzelnen hierarchischen Zellebenen zusammengefaßt werden. Sobald sich eine bewegliche Teilnehmerstation aus dem Funkversorgungsbereich einer Funkfeststation, mit der sie gerade eine Gesprächsverbindung hat, entfernt, muß dafür Sorge getragen werden, daß die Funkverbindung zu der beweglichen Teilnehmerstation von einer anderen Funkzelle, d.h. von einer anderen Feststation übernommen wird. Das Vorliegen eines solchen Funkzellenwechsels kann beispielsweise durch Messungen der Signalfeldstärke, des Signalrauschabstandes, der Bitfehlerrate, der Entfernung zwischen Feststation und beweglicher Teilnehmerstation usw. festgestellt werden. Wird eine derartige Situation erkannt, so ist eine Gesprächsübergabe, d.h. ein sogenannter "Handover" oder "Handoff" erforderlich.

Aus EP 526 436 A1 ist ein Verfahren zur Gesprächsübergabe für ein Mobilfunksystem mit verschiedenen Zellebenen vorgeschlagen. Hierbei wird als Kriterium für ein Weiterreichen einer Verbindung die Geschwindigkeit der ortsveränderlichen Teilnehmerstation herangezogen.

Aus der EP-A-05 89 278 ist ein mobiles Funknetz mit zwei Zellebenen einer hierarchischen Zellstruktur bekannt, bei dem die Aufenthaltsdauer einer Mobilstation in einer Mikrozelle gemessen wird. Abhängig von der gemessenen Aufenthaltsdauer der Mobilstation in der Mikrozelle erfolgt ein Weiterreichen der Mobilstation von der Makrozelle in diese Mikrozelle. Auch ein Weiterreichen der Mobilstation von einer Mikrozelle zu einer angrenzenden Mikrozelle oder zu einer Makrozelle erfolgt in Abhängigkeit der Aufenthaltsdauer der Mobilstation in der Mikrozelle.

In dem Aufsatz "USER SPEED ESTIMATION AND DYNAMIC CHANNEL ALLOCATION IN HIERARCHIVAL CELLULAR SYSTEM" von C. W. Sung et al., erschienen in Proceedings of the Vehicular Technology Conference, Stockhol, June 8-10, 1994, Band 1,8, Juni 1994, Institute of Electrical and Electronics Engineers, Seiten 91-95, wird ein Verfahren zur dynamischen Kanalzuweisung in einem hierarchischen Zellsystem beschrieben. Um eine dynamische Weiterreichung einer Mobilstation an eine Zelle in einer höheren oder niedrigeren Ebene des hierarchischen zellularen Systems zu erreichen, ist es erforderlich, die Teilnehmergeschwindikgeit zu kennen. Da dies jedoch in einer realen Umgebung nicht möglich ist, wird die Aufenthaltsdauer einer Mobilstation in einer Zelle, welche von der Geschwindigkeit des Teilnehmers abhängt, als Schätzwert benutzt. Um ein verbessertes Entscheidungsverhalten zu erzielen, wird vorgeschlagen, auch vergangene Aufenthaltszeiten zu berücksichtigen. Schließlich werden zwei zeitliche Schwellenwerte definiert, um eine Entscheidung zur Weiterreichung der Mobilstation treffen zu können. Ist die gemessenen Aufenthaltsdauer kleiner als der untere zeitliche Schwellenwert, wird die Mobilstation in eine Zelle einer höheren Ebene des hierarchischen zellularen Systems weitergereicht. Wenn die gemessene Aufenthaltsdauer größer als der größere zeitliche Schwellenwert ist, wird die Mobilstation in eine Zelle einer niedrigeren Ebene des hierarchischen zellularen Systems weitergereicht.

Der Erfindung liegt die Aufgabe zugrunde, ein Mobilfunksystem der eingangs genannten Art anzugeben, bei dem eine verbesserte Auslastung der einzelnen Funkversorgungsbereiche möglich ist.

Diese Aufgabe wird bei einem Mobilfunkübertragungssystem der eingangs genannten Art dadurch gelöst, daß das Mobilfunksystem Mittel zum Weiterreichen einer zwischen einer Feststation einer beweglichen Funkstation bestehenden Verbindung in Abhängigkeit der Aufenthaltsdauer der beweglichen Funkstation in einem Funkversorgungsbereich und/oder in Abhängigkeit der Verbindungsdauer aufweist.

Das Weiterreichen einer Verbindung vom Versorgungsbereich einer Funkfeststation in den Versorgungsbereich der weiteren Funkfeststation ist ohne großen zusätzlichen Aufwand dadurch möglich, daß die Aufenthaltsdauer bzw. die Verbindungsdauer einer beweglichen Funkstation beispielsweise durch einen Zähler in einfacher Weise bestimmt werden kann, ohne daß eine aufwendige Bestimmung beispielsweise der Geschwindigkeit der beweglichen Funkstation erforderlich ist. Alle Funkzellen, d.h. alle Funkversorgungsbereiche des Mobilfunkübertragungssystems sind dabei entsprechend ihrer jeweiligen Zellebene gekennzeichnet und somit einer bestimmten Zellhierarchie zuordenbar. In Abhängigkeit des Zelltyps, d.h. entsprechend der jeweiligen Hierarchie der Ursprungszelle und der Aufenthaltsdauer einer Verbindung im Versorgungsbereich der betreffenden Zielzelle sowie unter Berücksichtigung der Kennzeichnung der Zielzellen der entsprechenden Zellebenen erfolgt somit die Auslösung, d.h. die Triggerung des Weiterreichens der Vewrbindung. Darüberhinaus kann in Abhängigkeit des Zelltyps, d.h. entsprechend der jeweiligen Hierarchie der Ursprungszelle und der Verbindungsdauer einer Mobilstation mit der Feststation der Ursprungszelle sowie unter Berücksichtigung der Kennzeichnung der Zielzellen der entsprechenden Zellebenen das Weiterreichen einer Verbindung zu den Funkversorgungsbereich ebenfalls versorgenden weiteren Feststaionen erfolgen. Durch die Berücksichtigung der Verbindungsdauer in einer Ursprungs- zelle kann in Abhängigkeit des Zelltyps der betreffenden Zelle das Weiterreichen der Verbindung dann unterdrückt werden, wenn noch andere Mittel im System genutzt werden können, um den Grund für die Auslösung des Weiterreichens zu beseitigen. Insgesamt wird durch die Berücksichtigung der Aufenthaltsdauer und/oder der Verbindungsdauer somit ein Weiterreichen einer Verbindung schnell durchgeführt, es erfolgt eine zuverlässige Auswahl der Zielzellen und auch es wird eine effiziente Auslastung der einzelnen Funkversorgungsbereiche ermöglicht.

Eine effektive Steuerung der Gesprächübergabe für den Fall, daß die Mobilstation mit der Funkfeststation einer übergeordneten Zellebene, d.h. einer Makrozelle oder Schirmzelle verbunden ist, wird dadurch sichergestellt, daß das Mobilfunksystem mindestens zwei Ebenen einer Zellhierarchie aufweist und daß die Mittel zum Weiterreichen einer zwischen einer Feststation und einer beweglichen Funkstation bestehenden Verbindung in Abhängigkeit der Aufenthaltsdauer der beweglichen Funkstation in einem Funkversorgungsbereich dann vorgesehen sind, wenn ein Weiterreichen an eine Funkstation einer niedrigeren Ebene der Zellhierarchie vorgesehen ist.

Die Steuerung des Weiterreichens einer Verbindung in Abhängigkeit der Aufenthaltsdauer kann dabei derart erfolgen, daß die Mittel zum Weiterreichen einer zwischen einer Feststation und einer beweglichen Funkstation bestehenden Verbindung in Abhängigkeit der Verbindungsdauer dann vorgesehen sind, wenn die Verbindungsdauer einen vorgebbaren ersten Wert überschreitet.

Entsprechend wird eine effektive Steuerung der Gesprächübergabe für den Fall, daß die Mobilstation mit der Funkfeststation einer untergeordneten Zellebene, d.h. Mikrozelle oder Makrozelle verbunden ist dadurch sichergestellt, daß daß das Mobilfunksystem mindestens zwei Ebenen einer Zellhierarchie aufweist und daß die Mittel zum Weiterreichen einer zwischen einer Feststation und einer beweglichen Funkstation bestehenden Verbindung in Abhängigkeit der Verbindungsdauer dann vorgesehen sind, wenn ein Weiterreichen an eine Funkstation einer höheren Ebene der Zellhierarchie vorgesehen ist.

Die Steuerung des Weiterreichens einer Verbindung in Abhängigkeit der Verbindungsdauer kann in diesem Fall derart erfolgen, daß die Mittel zum Weiterreichen einer zwischen einer Feststation und einer beweglichen Funkstation bestehenden Verbindung in Abhängigkeit der Verbindungsdauer dann vorgesehen sind, wenn die Verbindungsdauer einen vorgebbaren ersten Wert unterschreitet.

Eine möglichst zuverlässige Steuerung der Gesprächübergabe erfolgt dadurch, daß das Mobilfunksystem weitere Mittel zur Weitergabe einer Verbindung in Abhängigkeit von vorgebbaren Kriterien, insbesondere Pegel-, Entfernungs-, und/oder Qualitätskriterien aufweist.

Für eine wirkungsvolle Durchführung des Weiterreichens einer Verbindung ist es vorteilhaft, daß das Mobilfunksystem Mittel zur Kennzeichnung einer Zuordnung der Feststationen des Mobilfunksystems zu mindestens zwei hierarchischen Ebenen aufweist.

Im folgenden wird die Erfindung anhand der in den Figuren dargestellten Ausführungsbeispiele näher beschrieben und erläutert.

Es zeigen:
Fig. 1 ein erstes Ausführungsbeispiel eines Funkübertragungssystems mit zentralen Mitteln zur Übergabe einer Verbindung,
Fig. 2 ein zweites Ausführungsbeispiel eines Funkübertragungssystems mit dezentralen Mitteln zur Übergabe einer Verbindung,
Fig. 3 ein Blockschaltbild zum Ablauf einer Gesprächsübergabe,
Fig. 4 ein Flußablaufdiagramm für das zeitgesteuerte Weiterreichen einer mit einer Funkfeststation einer unteren Ebene der Zellhierarchie bestehenden Verbindung und
Fig. 5 ein Flußablaufdiagramm für das zeitgetriggerte Weiterreichen einer mit einer Funkfeststation einer oberen Ebene der Zellhierarchie bestehenden Verbindung.

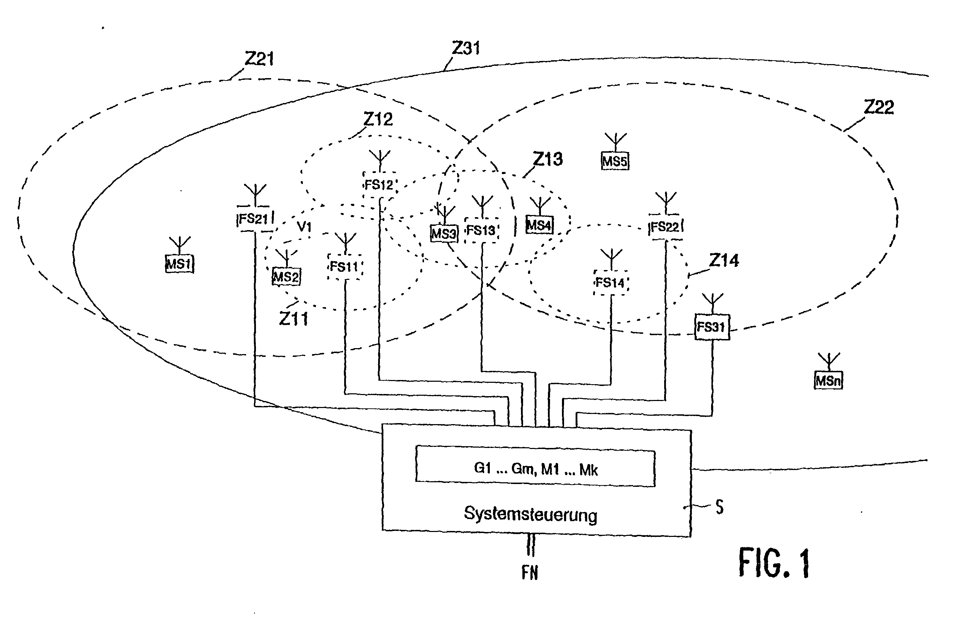

Fig. 1 zeigt ein Mobilfunkübertragungssystem, welches aus drei hierarchischen Ebenen aufgebaut ist. So sind Funkfeststationen FS11, FS12, FS13, FS14, die jeweils Funkversorgungsbereiche Z11, Z12, Z13, Z14, sogenannte Mikrozellen versorgen, einer unteren Ebene der Zellhierarchie zugeordnet. Die Funkfeststationen FS21, FS22, die Funkversorgungsbereiche Z21, Z22, sogenannte Makrozellen versorgen, sind einer mittleren Ebene der Zellhierarchie zugeordnet, während die Funkfeststation FS31 mit einem zugeordneten Funkversorgungsbereich Z31 (= sogenannte Schirmzelle) Teil einer oberen Ebene der Zellhierarchie ist. Die Funkfeststationen FS11, FS12, FS13, FS14, FS21, FS22, FS31 sind mit einer Steuereinrichtung S verbunden, die Gesprächsübergabeeinrichtungen G1..Gm sowie weitere Mittel M1..Mk zur Übergabe einer Verbindung aufweist. Bei einem GSM-Mobilfunkübertragungssystem entspricht die Steuereinrichtung S dem sogenannten Base Station Controller BSC. Die Steuereinrichtung S ist darüber hinaus an ein Festnetz FN eines Telefonsystems angeschlossen. In dem Mobilfunkübertragungssystem bewegen sich Mobilstationen MS1, MS2..MSn.

Durch den hierarchischen Aufbau des Mobilfunkübertragungssystems kommt es zu einer Mehrfachüberdeckung der Funkversorgungsbereiche. Eine Mobilstation MS1..MSn, die sich im in Fig. 1 dargestellten Mobilfunkübertragungssystem bewegt, hat somit je nach ihrem Standort die Möglichkeit mit Funkfeststationen verschiedener Zellhierarchien eine Verbindung aufzunehmen. Damit das Mobilfunksystem eine hohe Verkehrslast bei unterschiedlichem Bewegungsprofil der Mobilfunkteilnehmer im Zusammenhang mit unterschiedlichen, im betreffenden Mobilfunknetz realisierten Versorgungsbereichen einzelner Funkfeststationen effizient verarbeiten kann, sollen die sich langsam bewegenden Mobilfunkstationen, beispielsweise Handfunktelefone im Stadtbereich, eher den Funkzellen Z11, Z12, Z13, Z14 der unteren Zellhierarchie zugeordnet werden, während die Funkfeststationen FS21, FS22 der mittleren Hierarchie sowie die Funkfeststation FS31 der oberen Hierarchie mehr für die Versorgung der sich schnell bzw. sehr schnell bewegenden Mobilfunkstationen, beispielsweise zur Versorgung von Funkzellen im Bereich von Autobahnen oder Hochgeschwindigkeitszügen verwendet werden sollen, Hierdurch soll erreicht werden, daß bei sich schnell bewegenden Mobilstationen häufige Handover, die in der unteren Zellhierarchie bei sich schnell bewegenden Mobilstationen notwendig wären, vermieden werden. Dies soll im folgenden anhand eines Beispiels näher erläutert werden. Befindet sich die Mobilstation MS2, wie in Fig. 1 dargestellt ist, beispielsweise im Funkversorgungsbereich Z11 der Funkfeststation FS11 und besteht eine Verbindung V1 zwischen der Mobilstation MS2 und der Funkfeststation FS11, so wird mit Hilfe der in der Systemsteuerung S vorgesehenen Mittel M1..Mk die Zeit bestimmt, die sich die Mobilstation MS2 im Funkversorgungsbereich der Mikrozelle FS11, mit der sie momentan Verbindung hat, aufhält. Kommt es während der Zeitmessung zu einer Anforderung zum Weiterreichen der Verbindung, was beispielsweise durch ein Nachlassen der Signalfeldstärke hervorgerufen werden kann, so wird in der Steuereinrichtung S mit Hilfe der Mittel M1..Mk festgestellt, ob die Verbindungsdauer zwischen der Mobilstation MS2 und der Funkfeststation FS11 einen vorgebbaren Wert überschreitet. Ist dies der Fall, so gibt zunächst beispielsweise durch entsprechendes Leistungsmanagement der Sendeleistung der betreffenden Mobilstation und Funkfeststation die Möglichkeit, die Verbindung aufrecht zu erhalten. Gelingt dies nicht, so wird in diesem Fall, d.h. wenn die anhand der Zeitmessung festgestellte Verbindungsdauer den vorgegebenen Wert überschreitet, die Verbindung von der Funkfeststation FS11 an eine Zielzelle der gleichen Zellhierarchie weitergereicht, soweit diese verfügbar ist.

Ergibt der Vergleich der festgestellten Verbindungsdauer mit der vorgebbaren Zeitdauer daß die Verbindungsdauer mit der Funkfeststation FS11 nicht ausreichend war, d.h. die gemessene Zeit den vorgebbaren Wert unterschreitet, so erfolgt ein Weiterreichen der Verbindung an eine Zielzelle einer höheren Hierarchie, beispielsweise im vorliegenden Fall an die Funkfeststation FS21 des Funkversorgungsbereichs Z21. Hierdurch wird ein einfaches und wirkungsvolles Kriterium geschaffen für das Weiterreichen einer Verbindung aus dem Funkversorgungsbereich Zlj einer Funkfeststation FS1j, d.h. einer Funkfeststation der untersten Ebene der Zellhierarchie.

Eine ähnliche Vorgehensweise kann durch ein zeitgetriggertes Weiterreichen einer Verbindung auch in umgekehrter hierarchischer Reihenfolge erfolgen, d.h. wenn eine Verbindung mit einer Funkfeststation FS der obersten Zellhierarchie besteht. Dies soll im folgenden am Beispiel einer zwischen der Mobilstation MS5 und der Funkfeststation FS31 bestehenden Funkverbindung näher erläutert werden. Hierzu wird zunächst festgestellt, ob sich die Mobilstation MS5 im Funkversorgungsbereich einer Funkfeststation einer niedrigeren Zellebene als der aktuellen Zelle Z31 befindet. Dies ist im vorliegenden Beispiel die Zelle Z22 der Funkfeststation FS22. Ab diesem Zeitpunkt wird eine Zeitmessung gestartet, mit dem Ziel festzustellen, ob die Aufenthaltsdauer der Mobilstation MS5 in der Zelle Z22 ausreichend ist, d.h. ob die Aufenthaltsdauer einen vorgebbaren Wert übersteigt. Ist dies der Fall, so erfolgt ein Weiterreichen der Verbindung in die Zielzelle Z22, d.h. in eine Zielzelle einer niedrigeren Zellhierarchie.

Bewegt sich die Mobilstation MS5 beispielsweise in Richtung des Funkversorgungsbereichs Z13 der Funkfeststation FS13, so wird auch in diesem Fall wiederum festgestellt, wie lange die Aufenthaltsdauer der Mobilstation MS5 im Funkversorgungsbereich Z13 ist und falls die Aufenthaltsdauer den vorgegebenen Wert übersteigt, erfolgt wiederum auch ein Weiterreichen der Verbindung in die Zelle Z13, anderenfalls bleibt die Verbindung zur aktuellen Zelle bestehen oder es erfolgt ein Weiterreichen des Verbindung an eine Zelle der selben Zellhierarchie, beispielsweise an den Funkversorgungsbereich Z21 der Funkfeststation FS21.

Das in Fig. 1 dargestellte Mobilfunkübertragungssystem weist beispielhaft drei Zellhierarchieebenen auf, jedoch ist die Erfindung grundsätzlich auch bei Mobilfunübertragungssystemen mit zwei oder einer beliebigen Anzahl von Zellhierarchieebenen anwendbar.

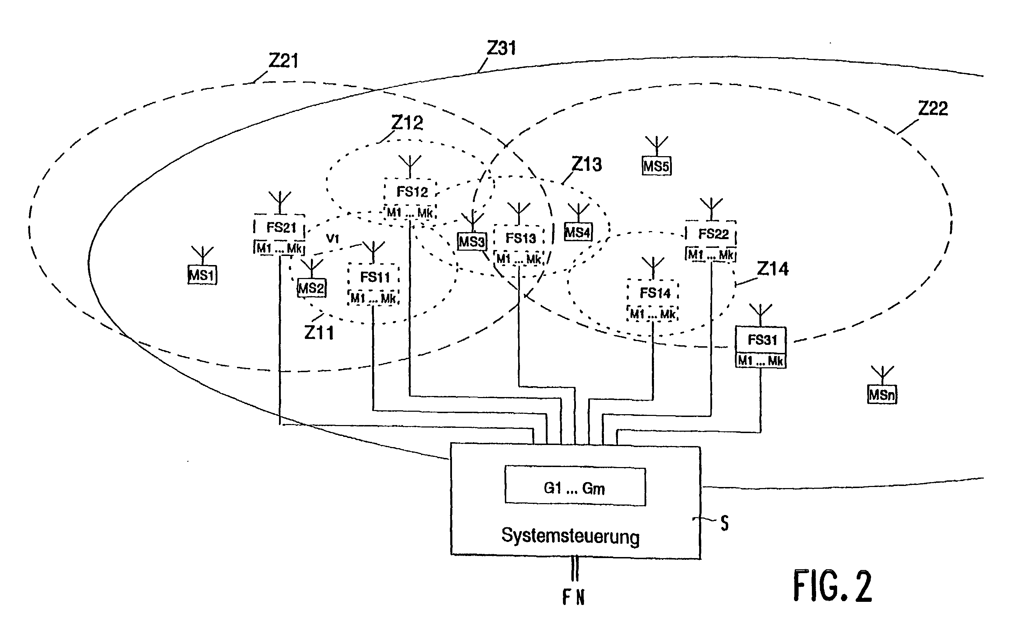

Fig. 2 zeigt ein Funkübertragungssystem, daß im wesentlichen dem in Fig. 1 dargestellten Funkübertragungssystem entspricht. Lediglich die Mittel M1..Mk zur Übergabe einer Verbindung V1..Vn in Abhängigkeit der Aufenthaltsdauer oder der Verbindungsdauer sind bei dem in Fig. 2 dargestellen Ausführungsbeispiel nicht in der Systemsteuerung S angeordnet, sondern dezentral bei den Funkfeststationen FS, in einem GSM-Mobilfunksystem beispielsweise beim oder im sogenannten Base Station Transceiver BTS. Ansonsten arbeitet das in Fig. 2 dargestellte Mobilfunkübertragungssystem in gleicher Weise wie das in Fig. 1 beschriebene Funkübertragungssystem.

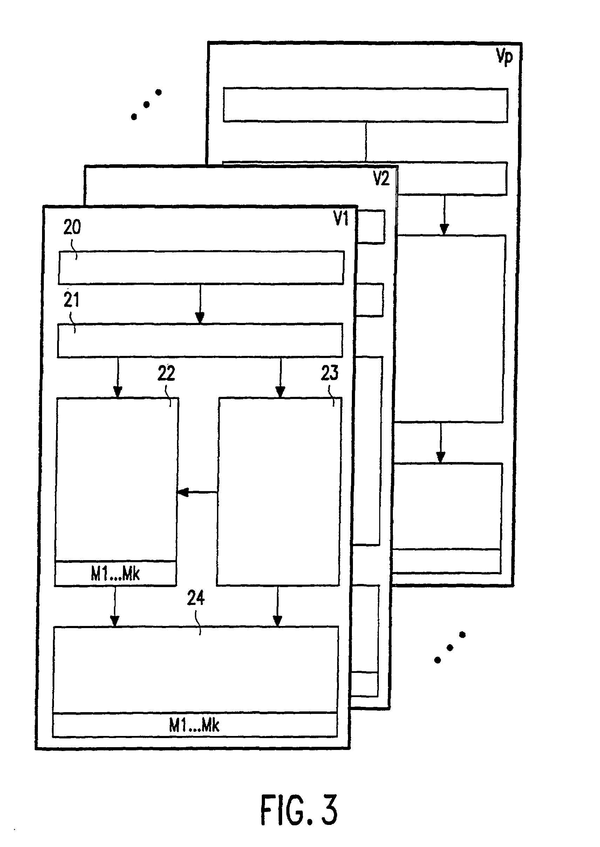

Fig. 3 zeigt ein Blockschaltbild, mit dem die Entscheidungsfindung zum Weiterreichen einer Verbindung verdeutlicht werden soll. Das Blockschaltbild soll beispielhaft anhand der Funkverbindung V1 beschrieben werden. Während einer bestehenden Funkverbindung werden in der Funkfeststaion (z.B. im Base Station Transceiver BTS einer GSM-Feststation) im Block 20 gesammelte Eingangsparameter, beispielsweise Empfangspegel der Funkfeststaionen der bedienenden Zelle und der Nachbarzellen, Qualitäts- und Entfernungsparameter der Verbindung zwischen Mobilstation und Feststation der bedienenden Zelle in einem Signalvorverarbeitungsblock 21 aufbereitet. Die so aufbereiteten Eingangsparameter dienen als Eingangswerte für die weiteren Verarbeitungsblöcke 22, 23, 24, die die Entscheidungsalgorithen zum Weiterreichen der Funkverbindung V1 enthalten. Diese Verarbeitungsblöcke 22, 23, 24 sind bei zentraler Anordnung der Mittel M1..Mk in der Steuereinrichtung S, beispielsweise im Base Station Controller BSC (vgl. Fig.1) und bei dezentraler Anordnung in oder bei den Funkfeststationen FS, beispielsweise im Base Station Transceiver angeordnet. In Abhängigkeit der im Block 22 ermittelten Aufenthaltsdauer und/oder Verbindungsdauer erfolgt im Block 23 eine Auswahl der Vergleichs- und Entscheidungsalgorithmen zum Weiterreichen der Verbindung und/oder sonstige hiermit im Zusammenhang stehende Maßnahmen zur Steuerung der Funkverbindung, wie beispielsweise ein entsprechendes Leistungsregelungskonzept (Power Control Management). Die Ergebnisse von Block 23 und 22 dienen dann als Grundlage für die im Block 24 erfolgende Auswahl der Algorithmen für die Aufstellung und Abarbeitung der sogenannten Zielzellenliste, d.h. die Reihenfolge der Zellhierarchien bei der Abarbeitung der Zielzellenliste.

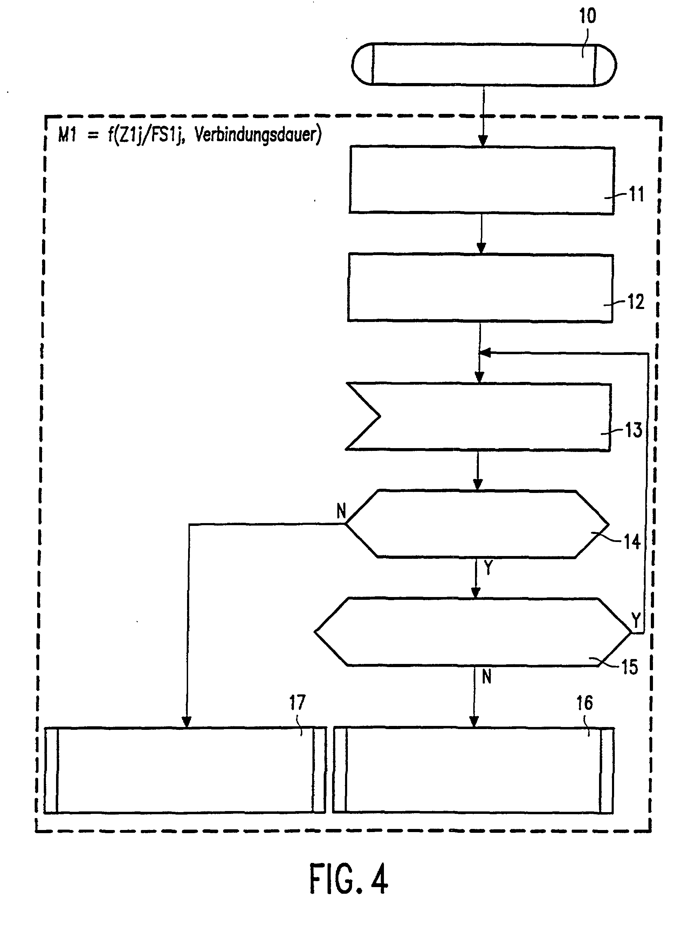

Fig. 4 zeigt ein Flußablaufdiagramm für das zeitgesteuerte Weiterreichen einer Verbindung aus dem Funkversorgungsbereich Zlj einer Funkfeststation FS1j, die der untersten Ebene der Zellhierarchie angehört. Bei den Funkfeststationen FS1j handelt es sich beispielsweise um die Funkfeststationen FS11, FS12, FS13, FS14 der in Fig. 1 und Fig. 2 dargestellten Mobilfunkübertragungssysteme mit den entsprechenden Funkversorgungsbereichen Zlj = Z11, Z12, Z13, Z14. Nach einem in einem Block 10 vorgebenen Start, der beispielsweise durch die Aufnahme einer Funkverbindung zwischen einer Mobilstation und einer Funkfeststation der untersten Zellhierarchie erfolgt, wird mit Hilfe der Mittel M1..Mk zunächst festgestellt, ob sich die Mobilstation im Funkversorgungsbereich Zlj befindet und Verbindung mit einer Funkfeststation FS1j der untersten Zellhierarchie besteht. Ist dies der Fall, so wird im Block 12 eine Zeitmessung gestartet. Kommt es während dieser Zeitmessung zu einer Anforderung zum Weiterreichen der Verbindung, beispielsweise in Folge von vorgebbaren Kriterien, beispielsweise Pegel-, Entfemungs- oder Qualitätskriterien, so wird im Block 14 weiter geprüft, ob die Verbindungsdauer, d.h. die Zeit seit dem Start der Zeitmessung und bis zur Anforderung zum Weiterreichen der Verbindung einen bestimmten Grenzwert (= vorgebbarer zweiter Wert), beispielsweise 15 bis 30 Sekunden übersteigt. Ist dies der Fall, so wird im Block 15 zunächst geprüft, ob sich der Grund für das Weiterreichen der Verbindung beseitigen läßt. Dies kann beispielsweise durch eine Erhöhung der Sendeleistung erreicht werden. Ist ein derartiges "Powermanagement" noch möglich, so wird die Zeitmesschleife nochmals durchlaufen. Besteht keine Möglichkeit mehr, das Weiterreichen der Verbindung sonstwie zu beseitigen, so erfolgt ein Weiterreichen der Verbindung im Block 16 an eine Zielzelle der gleichen Zielhierarchie wie der Ursprungszielzelle, soweit diese verfügbar ist. Ergibt die Prüfung der Verbindungsdauer mit der Funkfeststation FS1j im Block 14, daß die Verbindungsdauer geringer als ein vorgebbarer Vergleichswert ist, so erfolgt ein Weiterreichen der Verbindung in eine Zielzelle einer höheren Zellhierarchie, soweit diese verfügbar ist. Mit Hilfe des vorgeschlagenen Kriteriums der Bestimmung der Verbindungsdauer kann auf einfache Weise ein Kriterium geschaffen werden, mit dem eine möglichst sinnvolle und effektive Zuordnung der Mobilstationen zu den einzelnen Funkzellenhierarchien erfolgen kann. Aufwendige Messeinrichtungen zur Bestimmung der Geschwindigkeit sind nicht erforderlich. Die Mittel zur Übergabe einer Verbindung M1..Mk können dabei wie bereits in Fig. 1 und 2 dargestellt ist sowohl zentral in der Systemsteuerung, als auch dezentral in der Funkfeststation angeordnet sein. Bei Mobilfunksystemen mit mehr als zwei hierarchischen Ebenen kann der vorgebbare (zweite) Wert, d.h.der im Block 14 abzugfragende Grenzwert für versiedenen Zellhierarchien auch verschieden vorgegeben werden.

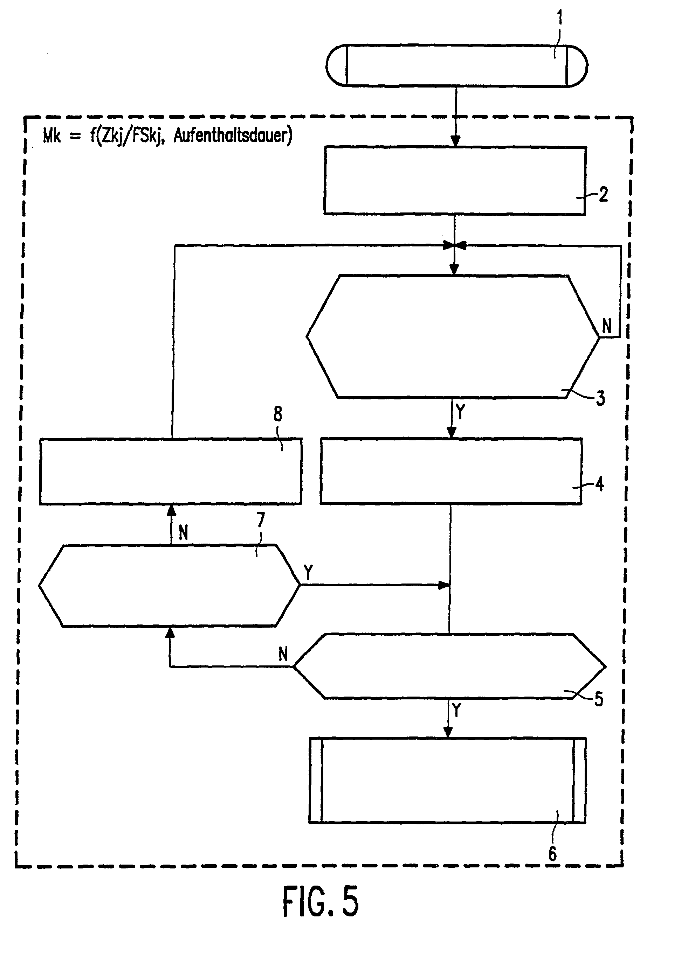

Fig. 5 zeigt ein Flußablaufdiagramm für ein zeitgetriggertes Weiterreichen einer Verbindung aus dem Versorgungsbereich ZKj einer Funkfeststation FSKj, der obersten Ebene der Zellhierarchie angehört. Im Falle des in Fig. 1 und Fig. 2 dargestellten Mobilfunkübertragungssystems ist dies die Funkfeststation FS31, die den Funkversorgungsbereich Z31 versorgt. Bei einem Mobilfunksystem, in dem nur zwei hierarchische Ebenen vorhanden sind, können dies jedoch ebenso die Funkfeststationen FS21 und FS22 der Zellzellen Z21 und Z22 (vergleiche Fig. 1, Fig. 2) sein. Bei dem in Fig. 5 dargestellten Flußablaufdiagramm erfolgt nachdem in Block 1 dargestellten Start, der beispielsweise wiederum durch die Aufnahme einer Verbindung zwischen einer Mobilstation und einer Feststation festgelegt wird, im Block 2 die Überprüfung, ob die Mobilstation sich im Funkversorgungsbereich einer Funkfeststation der obersten Zellebene befindet und auch mit dieser eine Verbindung unterhält. Ist dies der Fall, wird im Block 3 überprüft, ob sich die Mobilstation auch im Versorgungsbereich einer Funkfeststation einer niedrigeren Zellebene als der aktuellen Zelle befindet. Ist dies der Fall, so wird im Block 4 eine Zeitmessung gestartet und im Block 5 überprüft, ob sich die Mobilstation auch nach Ablauf der Zeitmessung noch im Funkversorgungsbereich der niedrigeren Zellebene befindet, d.h. die Aufenthaltsdauer ausreichend ist (= ob der vorgebbare erste Grenzwert überschritten wird). Ist dies der Fall, so erfolgt ein Weiterreichen der Verbindung in eine Zielzelle einer niedrigeren Zellhierarchie als der aktuellen Zelle (vergleiche Block 6). Ist die Aufenthaltsdauer im Funkversorgungsbereich der niedrigeren Zellebene nicht ausreichend, so erfolgt im Block 7 die Überprüfung, ob sich die Mobilstation weiterhin im Funkversorgungsbereich der Funkfeststation der niedrigeren Zellebene befindet. Ist dies der Fall, so wird überprüft, ob nach Start einer Zeitmessung im Block 4 die Aufenthaltsdauer weiterhin ausreichend ist (vergleiche Block 5). Befindet sich die Mobilstation nicht mehr im Versorgungsbereich der Funkstation der niedrigeren Zellebene, so erfolgt im Block 8 ein Rücksetzen der Zeitmessung und ein Rücksprung an den Anfang des Blocks 3, d.h. es wird erneut überprüft, ob sich die Mobilstation im Funkversorgungsbereich einer Funkfeststation einer niedrigeren Zellebene als der aktuellen Zelle befindet. Bei Mobilfunksystemen mit mehr als zwei hierarchischen Ebenen kann auch der vorgebbare (erste) Wert, d.h.der im Block 5 abzugfragende Grenzwert für versiedenene Zellhierarchien auch verschieden vorgegeben werden.

Bei dem in Fig. 1 und Fig. 2 dargestellten Mobilfunkübertragungssystem, in dem mehr als zwei hierarchische Ebenen vorhanden sind, ist neben den in den Fig. 4 und 5 beschriebenen Flußablaufdiagrammen, d.h. neben dem Übergang einer Verbindung von einer Feststation, die der obersten Ebene der Zellhierarchie angehört auf eine darunterliegende Zellhierarchieebene und umgekehrt auch eine Steuerung möglich, die eine Kombination, d.h. eine Vermischung der beiden Flußablaufdiagramme der Fig. 4 und 5 beinhaltet, möglich. Hierzu ist ein Flußablaufdiagramm denkbar, das sowohl das zeitgesteuerte als auch das zeitgetriggerte Weiterreichen einer Verbindung aus dem Versorgungsbereich Zij einer Funkfeststation FSij, die weder der untersten, noch der obersten Ebene der Zellhierarchie angehört denkbar mit 1 kleiner i kleiner k, wobei 1 die unterste Ebene und k die oberste Zellhierarchieebene kennzeichnet. Das Weiterreichen einer Verbindung aus dem Versorgungsbereich Zij einer Funkfeststation FSij, die weder der untersten, noch der obersten Ebene der Zellhierarchie angehört, kann hierbei durch eine gemischte komplexe Anwendung der in den Fig. 4 und 5 dargestellten Flußablaufdiagramme realisiert werden.

## Patentansprüche

1. Mobilfunksystem (FS11, FS12, FS13, FS14, FS21, FS22, FS31; MS1..MSn, S) mit mindestens zwei Ebenen einer Zellhierarchie, wobei das Mobilfunksystem (FS11, FS12, FS13, FS14, FS21, FS22, FS31; MS1 MSn, S) Mittel (M1..Mk) zum Weiterreichen einer zwischen einer Feststation (FS11, FS12, FS13, FS14, FS21, FS22, FS31) und einer beweglichen Funkstation (MS1..MSn) bestehenden Verbindung (V1..Vn) aufweist,
**dadurch gekennzeichnet, dass**
die Mittel (M1..Mk) zum Weiterreichen einer zwischen einer Feststation (FS21, FS22; FS31) und der beweglichen Funkstation (MS1..MSn) bestehenden Verbindung (V1..Vn) in Abhängigkeit der Aufenthaltsdauer (Ta) der beweglichen Funkstation (MS1..MSn) in einem Funkversorgungsbereich (Z11, Z12, Z13, Z14; Z11, Z12, Z13, Z14, Z21, Z22) dann vorgesehen sind, wenn ein Weiterreichen an eine Funkstation (FS11, FS12, FS13, FS14; FS11, FS12, FS13, FS14, FS21, FS22) einer niedrigeren Ebene der Zellhierarchie vorgesehen ist, und dass
dass die Mittel (M1..Mk) zum Weiterreichen einer zwischen einer Feststation (FS11, FS12, FS13, FS14; FS21, FS22) und der beweglichen Funkstation (MS1..MSn) bestehenden Verbindung (V1..Vn) in Abhängigkeit der Verbindungsdauer (Tv) dann vorgesehen sind, wenn ein Weiterreichen an eine Funkstation (FS21, FS22; FS31) einer höheren Ebene der Zellhierarchie vorgesehen ist.

2. Mobilfunksystem nach Anspruch 1, **dadurch gekennzeichnet, dass** die Mittel (M1..Mk) zum Weiterreichen einer zwischen einer Feststation (FS21, FS22; FS31) und einer beweglichen Funkstation (MS1..MSn) bestehenden Verbindung (V1..Vn) in Abhängigkeit der Aufenthaltsdauer (Ta) der beweglichen Funkstation (MS1..MSn) in einem Funkversorgungsbereich (Z11, Z12, Z13, Z14; Z11, Z12, Z13, Z14, Z21, Z22) dann vorgesehen sind, wenn die Aufenthaltsdauer (Ta) einen vorgebbaren ersten Wert überschreitet.

3. Mobilfunksystem nach Anspruch 1 oder 2, **dadurch gekennzeichnet, dass** die Mittel (M1..Mk) zum Weiterreichen einer zwischen einer Feststation (FS11, FS12; FS21, FS22) und einer beweglichen Funkstation (MS1..MSn) bestehenden Verbindung (V1..Vn) in Abhängigkeit der Verbindungsdauer (Tv) dann vorgesehen sind, wenn die Verbindungsdauer (Tv) einen vorgebbaren zweiten Wert unterschreitet.

4. Mobilfunksystem nach einem der Ansprüche 1 bis 3,**dadurch gekennzeichnet, dass** das Mobilfunksystem weitere Mittel (22) zur Weitergabe einer Verbindung (V1..Vn) in Abhängigkeit von vorgebbaren Kriterien, insbesondere Pegel-, Entfernungs- und/oder Qualitätskriterien aufweist.

5. Mobilfunksystem nach einem der Ansprüche 1 bis 4, **dadurch gekennzeichnet, dass** das Mobilfunksystem Mittel zur Kennzeichnung einer Zuordnung der Feststationen (FS11, FS12, FS13, FS14, FS21, FS22, FS31) des Mobilfunksystems zu mindestens zwei hierarchischen Ebenen aufweist.

6. Feststation (FS11, FS12, FS13, FS14, FS21, FS22, FS31) für ein Mobilfunksystem (FS11, FS12, FS13, FS14, FS21, j10 FS22, FS31; MS1 MSn, S) mit mindestens zwei Ebenen einer Zellhierarchie, wobei mindestens eine Feststation (FS11, FS12, FS13, FS14, FS21, FS22, FS31) des Mobilfunksystems (FS11, FS12, FS13, j FS14, FS21, FS22, FS31; MS1..MSn, S) Mittel (M1..Mk) zum Weiterreichen einer zwischen einer Feststation (FS11, FS12, FS13, FS14, FS21, FS22, FS31) und einer beweglichen Funkstation (MS1..MSn) bestehenden Verbindung (V1..Vn) aufweist,
**dadurch gekennzeichnet, dass**
die Mittel (M1..Mk) zum Weiterreichen einer zwischen einer Feststation (FS21, FS22; FS31) und der beweglichen Funkstation (MS1..MSn) bestehenden Verbindung (V1..Vn) in Abhängigkeit der Aufenthaltsdauer (Ta) der beweglichen Funkstation (MS1..MSn) in einem Funkversorgungsbereich (Z11, Z12, Z13, Z14; Z11, Z12, Z13, Z14, Z21, Z22) dann vorgesehen sind, wenn ein Weiterreichen an eine Funkstation (FS11, FS12, FS13, FS14; FS11, FS12, FS13, FS14, FS21, FS22) einer niedrigeren Ebene der Zellhierarchie vorgesehen ist,
und dass die Mittel (M1..Mk) zum Weiterreichen einer zwischen einer Feststation (FS11, FS12, FS13, FS14; FS21, FS22) und der beweglichen Funkstation (MS1..MSn) bestehenden Verbindung (V1..Vn) in Abhängigkeit der Verbindungsdauer (Tv) dann vorgesehen sind, wenn ein Weiterreichen an eine Funkstation (FS21, FS22; FS31) einer höheren Ebene der Zellhierarchie vorgesehen ist.

7. Feststation nach Anspruch 6, **dadurch gekennzeichnet, dass** die Mittel (M1..Mk) zum Weiterreichen einer zwischen einer Feststation (FS21, FS22; FS31) und einer beweglichen Funkstation (MS1..MSn) bestehenden Verbindung (V1..Vn) in Abhängigkeit der Aufenthaltsdauer (Ta) der beweglichen Funkstation (MS1..MSn) in einem Funkversorgungsbereich (Z11, Z12, Z13, Z14; Z11, Z12, Z13, Z14, Z21, Z22) dann vorgesehen sind, wenn die Aufenthaltsdauer (Ta) einen vorgebbaren ersten Wert überschreitet.

8. Feststation nach Anspruch 6 oder 7, **dadurch gekennzeichnet, dass** die Mittel (M1..Mk) zum Weiterreichen einer zwischen einer Feststation (FS11, FS12; FS21, FS22) und einer beweglichen Funkstation (MS1..MSn) bestehenden Verbindung (V1..Vn) in Abhängigkeit der Verbindungsdauer (Tv) dann vorgesehen sind, wenn die Verbindungsdauer (Tv) einen vorgebbaren zweiten Wert unterschreitet.

9. Feststation nach einem der Ansprüche 6 bis 8,**dadurch gekennzeichnet, dass** die Feststation (FS11, FS12, FS13, FS14, FS21, FS22, FS31) weitere Mittel (22) zur Weitergabe einer Verbindung (V1..Vn) in Abhängigkeit von vorgebbaren Kriterien, insbesondere Pegel-, Entfernungs-, und/oder Qualitätskriterien aufweist.

10. Feststation nach einem der Ansprüche 6 bis 9, **dadurch gekennzeichnet, dass** die Feststation (FS11, FS12, FS13, FS14, FS21, FS22, FS31) Mittel zur Kennzeichnung einer Zuordnung der Feststationen (FS11, FS12, FS13, FS14, FS21, FS22, FS31) des Mobilfunksystems zu mindestens zwei hierarchischen Ebenen aufweist.

11. Steuereinrichtung (S) für ein Mobilfunkübertragungssystem (FS11, FS12, FS13, FS14, FS21, FS22, FS31; MS1..MSn, S) mit mindestens zwei Ebenen einer Zellhierarchie, wobei die Steuereinrichtung (S) Mittel (M1..Mk) zum Weiterreichen einer zwischen einer Feststation (FS11, FS12, FS13, FS14, FS21, FS22, FS31) und einer beweglichen Funkstation (MS1..MSn) bestehenden Verbindung (V1..Vn) aufweist,
**dadurch gekennzeichnet, dass**
die Mittel (M1..Mk) zum Weiterreichen einer zwischen einer Feststation (FS21, FS22; FS31) und der beweglichen Funkstation (MS1..MSn) bestehenden Verbindung (V1..Vn) in Abhängigkeit der Aufenthaltsdauer (Ta) der beweglichen Funkstation (MS1..MSn) in einem Funkversorgungsbereich (Z11, Z12, Z13, Z14; Z11, Z12, Z13, Z14, Z21, Z22) dann vorgesehen sind, wenn ein Weiterreichen an eine Funkstation (FS11, FS12, FS13, FS14; FS11, FS12, FS13, FS14, FS21, FS22) einer niedrigeren Ebene der Zellhierarchie vorgesehen ist, und dass
die Mittel (M1..Mk) zum Weiterreichen einer zwischen einer Feststation (FS11, FS12, FS13, FS14; FS21, FS22) und der beweglichen Funkstation (MS1..MSn) bestehenden Verbindung (V1..Vn) in Abhängigkeit der Verbindungsdauer (Tv) dann vorgesehen sind, wenn ein Weiterreichen an eine Funkstation (FS21, FS22; FS31) einer höheren Ebene der Zellhierarchie vorgesehen ist.

12. Steuereinrichtung nach Anspruch 11, **dadurch gekennzeichnet, dass** die Mittel (M1..Mk) zum Weiterreichen einer zwischen einer Feststation (FS21, FS22; FS31) und einer beweglichen Funkstation (MS1..MSn) bestehenden Verbindung (V1..Vn) in Abhängigkeit der Aufenthaltsdauer (Ta) der beweglichen Funkstation (MS1..MSn) in einem Funkversorgungsbereich (Z11, Z12, Z13, Z14; Z11, Z12, Z13, Z14, Z21, Z22) dann vorgesehen sind, wenn die Aufenthaltsdauer (Ta) einen vorgebbaren ersten Wert überschreitet.

13. Steuereinrichtung nach Anspruch 11 oder 12, **dadurch gekennzeichnet, dass** die Mittel (M1..Mk) zum Weiterreichen einer zwischen einer Feststation (FS11, FS12; FS21, FS22) und einer beweglichen Funkstation (MS1..MSn) bestehenden Verbindung (V1..Vn) in Abhängigkeit der Verbindungsdauer (Tv) dann vorgesehen sind, wenn die Verbindungsdauer (Tv) einen vorgebbaren zweiten Wert unterschreitet.

14. Steuereinrichtung nach einem der Ansprüche 11 bis 13, **dadurch gekennzeichnet, dass** die Steuereinrichtung (S) weitere Mittel (22) zur Weitergabe einer Verbindung (V1..Vn) in Abhängigkeit von vorgebbaren Kriterien, insbesondere Pegel-, Entfernungs- und/oder Qualitätskriterien aufweist.

15. Steuereinrichtung nach einem der Ansprüche 11 bis 14, **dadurch gekennzeichnet, dass** die Steuereinrichtung (S) Mittel zur Kennzeichnung einer Zuordnung der Feststationen (FS11, FS12, FS13, FS14, FS21, FS22, FS31) des Mobilfunksystems zu mindestens zwei hierarchischen Ebenen aufweist.

16. Verfahren zum Weiterreichen einer zwischen einer Feststation (FS11, FS12, FS13, FS14, FS21, FS22, FS31) und einer beweglichen Funkstation (MS1..MSn) bestehenden Verbindung (V1..Vn) in einem Mobilfunksystem mit mindestens zwei Ebenen einer Zellhierarchie,
dadurch gekennzeichhnet, dass
das Weiterreichen einer zwischen einer Feststation (FS21, FS22; FS31) und der beweglichen Funkstation (MS1..MSn) bestehenden Verbindung (V1..Vn) in Abhängigkeit der Aufenthaltsdauer (Ta) der beweglichen Funkstation (MS1..MSn) in einem Funkversorgungsbereich (Z11, Z12, Z13, Z14; Z11, Z12, Z13, Z14, Z21, Z22) zum Weiterreichen an eine Feststation (FS11, FS12, FS13, FS14; FS11, FS12, FS13, FS14, FS21, FS22) einer niedrigeren Ebene der Zellhierarchie erfolgt, und dass
das Weiterreichen einer zwischen einer Feststation (FS11, FS12, FS13, FS14; FS21, FS22) und der beweglichen Funkstation (MS1..MSn) bestehenden Verbindung (V1..Vn) in Abhängigkeit der Verbindungsdauer (Tv) zum Weiterreichen an eine Funkstation (FS21, FS22; FS31) einer höheren Ebene der Zellhierarchie erfolgt.

17. Verfahren nach Anspruch 16, **dadurch gekennzeichnet, dass** ein Weiterreichen einer zwischen einer Feststation (FS21, FS22; FS31) und einer beweglichen Funkstation (MS1..MSn) bestehenden Verbindung (V1..Vn) in Abhängigkeit der Aufenthaltsdauer (Ta) der beweglichen Funkstation (MS1 MSn) in einem Funkversorgungsbereich (Z11, Z12, Z13, Z14; Z11, Z12, Z13, Z14, Z21, Z22) dann erfolgt, wenn die Aufenthaltsdauer (Ta) einen vorgebbaren ersten Wert überschreitet.

18. Verfahren nach Anspruch 16 oder 17, **dadurch gekennzeichnet, dass** ein Weiterreichen einer zwischen einer Feststation (FS11, FS12; FS21, FS22) und einer beweglichen Funkstation (MS1..MSn) bestehenden Verbindung (V1..Vn) in Abhängigkeit der Verbindungsdauer (Tv) dann erfolgt, wenn die Verbindungsdauer (Tv) einen vorgebbaren zweiten Wert unterschreitet.

19. Verfahren nach einem der Ansprüche 16 bis 18, **dadurch gekennzeichnet, dass** die Weitergabe einer Verbindung (V1..Vn) in Abhängigkeit von vorgebbaren Kriterien, insbesondere Pegel-, Entfernungs-, und/oder Qualitätskriterien erfolgt.

20. Verfahren nach einem der Ansprüche 16 bis 19, **dadurch gekennzeichnet, dass** die Feststationen (FS11, FS12, FS13, FS14, FS21, FS22, FS31) des Mobilfunksystems mindestens zwei hierarchischen Ebenen zugeordnet sind.

## Claims

1. Mobile radio system (FS11, FS12, FS13, FS14, FS21, FS22, FS31; MS1..MSn, S) comprising at least two levels of a cell hierarchy, the mobile radio system (FS11, FS12, FS13, FS14, FS21, FS22, FS31; MS1 MSn, S) exhibiting means (M1..Mk) for handing over a connection (V1..Vn) existing between a base station (FS11, FS12, FS13, FS14, FS21, FS22, FS31) and a mobile radio station (MS1..MSn), **characterized in that** the means (M1..Mk) for handover of a connection (V1..Vn) existing between a base station (FS21, FS22; FS31) and the mobile radio station (MS1..MSn) are provided in dependence on the length of stay (Ta) of the mobile radio station (MS1..MSn) in a radio coverage area (Z11, Z12, Z13, Z14; Z11, Z12, Z13, Z14, Z21, Z22) when a handover to a radio station (FS11, FS12, FS13, FS14; FS11, FS12, FS13, FS14, FS21, FS22) of a lower level of the cell hierarchy is provided, and **in that** the means (M1..Mk) for handover of a connection (V1..Vn) existing between a base station (FS11, FS12, FS13, FS14; FS21, FS22) and the mobile radio station (MS1..MSn) are provided in dependence on the length of stay (Tv) when a handover to a radio station (FS21, FS22; FS31) of a higher level of the cell hierarchy is provided.

2. Mobile radio system according to Claim 1, **characterized in that** the means (M1..Mk) for handover of a connection (V1..Vn) existing between a base station (FS21, FS22; FS31) and a mobile radio station (MS1..MSn) are provided in dependence on the length of stay (Ta) of the mobile radio station (MS1..MSn) in a radio coverage area (Z11, Z12, Z13, Z14; Z11, Z12, Z13, Z14, Z21, Z22) when the length of stay (Ta) exceeds a predeterminable first value.

3. Mobile radio system according to Claim 1 or 2, **characterized in that** the means (M1..Mk) for handover of a connection (V1..Vn) existing between a base station (FS11, FS12; FS21, FS22) and a mobile radio station (MS1..MSn) are provided in dependence on the length of stay (Tv) when the length of stay (Tv) drops below a predeterminable second value.

4. Mobile radio system according to one of Claims 1 to 3, **characterized in that** the mobile radio system exhibits further means (22) for handing over a connection (V1..Vn) in dependence on predeterminable criteria, particularly level, distance and/or quality criteria.

5. Mobile radio system according to one of Claims 1 to 4, **characterized in that** the mobile radio system exhibits means for identifying an allocation of the base stations (FS11, FS12, FS13, FS14, FS21, FS22, FS31) of the mobile radio system to at least two hierarchical levels.

6. Base station (FS11, FS12, FS13, FS14, FS21, FS22, FS31) for a mobile radio system (FS11, FS12, FS13, FS14, FS21, j10 FS22, FS31; MS1 MSn, S) comprising at least two levels of a cell hierarchy, in which at least one base station (FS11, FS12, FS13, FS14, FS21, FS22, FS31) of the mobile radio system (FS11, FS12, FS13, j FS14, FS21, FS22, FS31; MS1..MSn, S) exhibits means (M1..Mk) for handing over a connection (V1..Vn) existing between a base station (FS11, FS12, FS13, FS14, FS21, FS22, FS31) and a mobile radio station (MS1..MSn), **characterized in that** the means (M1..Mk) for handover of a connection (V1..Vn) existing between a base station (FS21, FS22; FS31) and the mobile radio station (MS1..MSn) are provided in dependence on the length of stay (Ta) of the mobile radio station (MS1..MSn) in a radio coverage area (Z11, Z12, Z13, Z14; Z11, Z12, Z13, Z14, Z21, Z22) when a handover to a radio station (FS11, FS12, FS13, FS14; FS11, FS12, FS13, FS14, FS21, FS22) of a lower level of the cell hierarchy is provided, and **in that** the means (M1..Mk) for handover of a connection (V1..Vn) existing between a base station (FS11, FS12, FS13, FS14; FS21, FS22) and the mobile radio station (MS1..MSn) are provided in dependence on the length of stay (Tv) when a handover to a radio station (FS21, FS22; FS31) of a higher level of the cell hierarchy is provided.

7. Base station according to Claim 6, **characterized in that** the means (M1..Mk) for handover of a connection (V1..Vn) existing between a base station (FS21, FS22; FS31) and a mobile radio station (MS1..MSn) are provided in dependence on the length of stay (Ta) of the mobile radio station (MS1..MSn) in a radio coverage area (Z11, Z12, Z13, Z14; Z11, Z12, Z13, Z14, Z21, Z22) when the length of stay (Ta) exceeds a predeterminable first value.

8. Base station according to Claim 6 or 7, **characterized in that** the means (M1..Mk) for handover of a connection (V1..Vn) existing between a base station (FS11, FS12; FS21, FS22) and a mobile radio station (MS1..MSn) are provided in dependence on the length of stay (Tv) when the length of stay (Tv) drops below a predeterminable second value.

9. Base station according to one of Claims 6 to 8, **characterized in that** the base station (FS11, FS12, FS13, FS14, FS21, FS22, FS31) exhibits further means (22) for handing over a connection (V1..Vn) in dependence on predeterminable criteria, particularly level, distance and/or quality criteria.

10. Base station according to one of Claims 6 to 9, **characterized in that** the base station (FS11, FS12, FS13, FS14, FS21, FS22, FS31) exhibits means for identifying an allocation of the base stations (FS11, FS12, FS13, FS14, FS21, FS22, FS31) of the mobile radio system to at least two hierarchical levels.

11. Control device (S) for a mobile radio transmission system (FS11, FS12, FS13, FS14, FS21, FS22, FS31; MS1..MSn, S) comprising at least two levels of a cell hierarchy, in which the control device (S) exhibits means (M1..Mk) for handing over a connection (V1..Vn) existing between a base station (FS11, FS12, FS13, FS14, FS21, FS22, FS31) and a mobile radio station (MS1..MSn), **characterized in that** the means (M1..Mk) for handover of a connection (V1..Vn) existing between a base station (FS21, FS22; FS31) and the mobile radio station (MS1..MSn) are provided in dependence on the length of stay (Ta) of the mobile radio station (MS1..MSn) in a radio coverage area (Z11, Z12, Z13, Z14; Z11, Z12, Z13, Z14, Z21, Z22) when a handover to a radio station (FS11, FS12, FS13, FS14; FS11, FS12, FS13, FS14, FS21, FS22) of a lower level of the cell hierarchy is provided, and **in that** the means (M1..Mk) for handover of a connection (V1..Vn) existing between a base station (FS11, FS12, FS13, FS14; FS21, FS22) and the mobile radio station (MS1..MSn) are provided in dependence on the length of stay (Tv) when a handover to a radio station (FS21, FS22; FS31) of a higher level of the cell hierarchy is provided.

12. Control device according to Claim 11, **characterized in that** the means (M1..Mk) for handover of a connection (V1..Vn) existing between a base station (FS21, FS22; FS31) and a mobile radio station (MS1..MSn) are provided in dependence on the length of stay (Ta) of the mobile radio station (MS1..MSn) in a radio coverage area (Z11, Z12, Z13, Z14; Z17, Z12, Z13, Z14, Z21, Z22) when the length of stay (Ta) exceeds a predeterminable first value.

13. Control device according to Claim 11 or 12, **characterized in that** the means (M1..Mk) for handover of a connection (V1..Vn) existing between a base station (FS11, FS12; FS21, FS22) and a mobile radio station (MS1..MSn) are provided in dependence on the length of stay (Tv) when the length of stay (Tv) drops below a predeterminable second value.

14. Control device according to one of Claims 11 to 13, **characterized in that** the control device (S) exhibits further means (22) for handing over a connection (V1..Vn) in dependence on predeterminable criteria, particularly level, distance and/or quality criteria.

15. Control device according to one of Claims 11 to 14, **characterized in that** the control device (S) exhibits means for identifying an allocation of the base stations (FS11, FS12, FS13, FS14, FS21, FS22, FS31) of the mobile radio system to at least two hierarchical levels.

16. Method for handing over a connection (V1..Vn) existing between a base station (FS11, FS12, FS13, FS14, FS21, FS22, FS31) and a mobile radio station (MS1..MSn) in a mobile radio system comprising at least two levels of a cell hierarchy, **characterized in that** the handing over of a connection (V1..Vn) existing between a base station (FS21, FS22; FS31) and the mobile radio station (MS1..MSn) in dependence on the length of stay (Ta) of the mobile radio station (MS1..MSn) in a radio coverage area (Z11, Z12, Z13, Z14; Z11, Z12, Z13, Z14, Z21, Z22) is effected for forwarding to a base station (FS11, FS12, FS13, FS14; FS11, FS12, FS13, FS14, FS21, FS22) of a lower level of the cell hierarchy, and **in that** the handing over of a connection (V1..Vn) existing between a base station (FS11, FS12, FS13, FS14; FS21, FS22) and the mobile radio station (MS1..MSn) in dependence on the length of stay (Tv) is effected for forwarding to a radio station (FS21, FS22; FS31) of a higher level of the cell hierarchy.

17. Method according to Claim 16, **characterized in that** a handover of a connection (V1..Vn) existing between a base station (FS21, FS22; FS31) and a mobile radio station (MS1..MSn) in dependence on the length of stay (Ta) of the mobile radio station (MS1 MSn) in a radio coverage area (Z11, Z12, Z13, Z14; Z11, Z12, Z13, Z14, Z21, Z22) is effected when the length of stay (Ta) exceeds a predeterminable first value.

18. Method according to Claim 16 or 17, **characterized in that** a handover of a connection (V1..Vn) existing between a base station (FS11, FS12; FS21, FS22) and a mobile radio station (MS1..MSn) in dependence on the length of stay (Tv) is effected when the length of stay (Tv) drops below a predeterminable second value.

19. Method according to one of Claims 16 to 18, **characterized in that** the handover of a connection (V1..Vn) is effected in dependence on predeterminable criteria, particularly level, distance and/or quality criteria.

20. Method according to one of Claims 16 to 19, **characterized in that** the base stations (FS11, FS12, FS13, FS14, FS21, FS22, FS31) of the mobile radio system are allocated to at least two hierarchical levels.

## Revendications

1. Système radiotéléphonique mobile (FS11, FS12, FS13, FS14, FS21, FS22, FS31 ; MS1 ... MSn, S) avec au moins deux niveaux d'une hiérarchie de cellules, le système radiotéléphonique mobile (FS11, FS12, FS13, FS14, FS21, FS22, FS31 ; MS1 ... MSn, S) présentant des moyens (M1 ... Mk) pour transférer une communication existante (V1 ... Vn) entre une station fixe (FS11, FS12, FS13, FS14, FS21, FS22, FS31) et une station de radio mobile (MS1 ... MSn),
**caractérisé en ce que** les moyens (M1 ... Mk) sont alors prévus pour transférer une communication existante (V1 ... Vn) entre une station fixe (FS21, FS22 ; FS31) et la station de radio mobile (MS1 ... MSn) en fonction de la durée (Ta) de séjour de la station de radio mobile (MS1 ... MSn) dans une zone de portée radio (Z11, Z12, Z13, Z14 ; Z11, Z12, Z13, Z14, Z21, Z22) lorsqu'on prévoit une propagation vers une station de radio (FS11, FS12, FS13, FS14 ; FS11, FS12, FS13, FS14, FS21, FS22) d'un niveau inférieur de la hiérarchie de cellules,
et **en ce que** les moyens (M1 ... Mk) sont alors prévus pour transférer une communication existante (V1 ... Vn) entre une station fixe (FS11, FS12, FS13, FS14 ; FS21, FS22) et la station de radio mobile (MS1 ... MSn) en fonction de la durée (Tv) de la communication lorsqu'on prévoit une propagation vers une station de radio (FS21, FS22 ; FS31) d'un niveau supérieur de la hiérarchie de cellules.

2. Système radiotéléphonique mobile selon la revendication 1, **caractérisé en ce que** les moyens (M1 ... Mk) sont alors prévus pour transférer une communication existante (V1 ... Vn) entre une station fixe (FS21, FS22 ; FS31) et une station de radio mobile (MS1 ... MSn) en fonction de la durée (Ta) de séjour de la station de radio mobile (MS1 ... MSn) dans une zone de portée radio (Z11, Z12, Z13, Z14 ; Z11, Z12, Z13, Z14, Z21, Z22) lorsque la durée de séjour (Ta) dépasse une première valeur pouvant être prédéfinie.

3. Système radiotéléphonique mobile selon la revendication 1 ou 2, **caractérisé en ce que** les moyens (M1 ... Mk) sont alors prévus pour transférer une communication existante (V1 ... Vn) entre une station fixe (FS11, FS12 ; FS21, FS22) et une station de radio mobile (MS1 ... MSn) en fonction de la durée (Tv) de la communication lorsque la durée (Tv) de la communication passe au-dessous d'une deuxième valeur pouvant être prédéfinie.

4. Système radiotéléphonique mobile selon l'une des revendications 1 à 3, **caractérisé en ce que** le système radiotéléphonique mobile présente d'autres moyens (22) pour transférer une communication (V1 ... Vn) en fonction de critères pouvant être prédéfinis, en particulier de critères de niveau, de distance et/ou de qualité.

5. Système radiotéléphonique mobile selon l'une des revendications 1 à 4, **caractérisé en ce que** le système radiotéléphonique mobile présente des moyens de marquage d'une attribution des stations fixes (FS11, FS12, FS13, FS14, FS21, FS22, FS31) du système radiotéléphonique mobile à au moins deux niveaux hiérarchiques.

6. Station fixe (FS11, FS12, FS13, FS14, FS21, FS22, FS31) pour un système radiotéléphonique mobile (FS11, FS12, FS13, FS14, FS21, j10 FS22, FS31 ; MS1 ... MSn, S) avec au moins deux niveaux d'une hiérarchie de cellules, une station fixe (FS11, FS12, FS13, FS14, FS21, FS22, FS31) au moins du système radiotéléphonique mobile (FS11, FS12, FS13, j FS14, FS21, FS22, FS31 ; MS1 ... MSn, S) présentant des moyens (M1 ... Mk) pour transférer une communication existante (V1 ... Vn) entre une station fixe (FS11, FS12, FS13, FS14, FS21, FS22, FS31) et une station de radio mobile (MS1 ... MSn),
**caractérisée en ce que** les moyens (M1 ... Mk) sont alors prévus pour transférer une communication existante (V1 ... Vn) entre une station fixe (FS21, FS22 ; FS31) et la station de radio mobile (MS1 ... MSn) en fonction de la durée (Ta) de séjour de la station de radio mobile (MS1 ... MSn) dans une zone de portée radio (Z11, Z12, Z13, Z14 ; Z11, Z12, Z13, Z14, Z21, Z22) lorsqu'on prévoit une propagation vers une station de radio (FS11, FS12, FS13, FS14 ; FS11, FS12, FS13, FS14, FS21, FS22) d'un niveau inférieur de la hiérarchie de cellules,
et **en ce que** les moyens (M1 ... Mk) sont alors prévus pour transférer une communication existante (V1 ... Vn) entre une station fixe (FS11, FS12, FS13, FS14 ; FS21, FS22) et la station de radio mobile (MS1 ... MSn) en fonction de la durée (Tv) de la communication lorsqu'on prévoit une propagation vers une station de radio (FS21, FS22 ; FS31) d'un niveau supérieur de la hiérarchie de cellules.

7. Station fixe selon la revendication 6, **caractérisée en ce que** les moyens (M1 ... Mk) sont alors prévus pour transférer une communication existante (V1 ... Vn) entre une station fixe (FS21, FS22 ; FS31) et une station de radio mobile (MS1 ... MSn) en fonction de la durée (Ta) de séjour de la station de radio mobile (MS1 ... MSn) dans une zone de portée radio (Z11, Z12, Z13, Z14 ; Z11, Z12, Z13, Z14, Z21, Z22) lorsque la durée de séjour (Ta) dépasse une première valeur pouvant être prédéfinie.

8. Station fixe selon la revendication 6 ou 7, **caractérisée en ce que** les moyens (M1 ... Mk) sont alors prévus pour transférer une communication existante (V1 ... Vn) entre une station fixe (FS11, FS12 ; FS21, FS22) et une station de radio mobile (MS1 ... MSn) en fonction de la durée (Tv) de la communication lorsque la durée (Tv) de la communication passe au-dessous d'une deuxième valeur pouvant être prédéfinie.

9. Station fixe selon l'une des revendications 6 à 8, **caractérisée en ce que** la station fixe (FS11, FS12, FS13, FS14, FS21, FS22, FS31) présente d'autres moyens (22) pour transférer une communication (V1 ... Vn) en fonction de critères pouvant être prédéfinis, en particulier de critères de niveau, de distance et/ou de qualité.

10. Station fixe selon l'une des revendications 6 à 9, **caractérisée en ce que** la station fixe (FS11, FS12, FS13, FS14, FS21, FS22, FS31) présente des moyens de marquage d'une attribution des stations fixes (FS11, FS12, FS13, FS14, FS21, FS22, FS31) du système radiotéléphonique mobile à au moins deux niveaux hiérarchiques.

11. Equipement de commande (S) pour un système de transmission radiotéléphonique mobile (FS11, FS12, FS13, FS14, FS21, FS22, FS31 ; MS1 ... MSn, S) avec au moins deux niveaux d'une hiérarchie de cellules, l'équipement de commande (S) présentant des moyens (M1 ... Mk) pour transférer une communication existante (V1 ... Vn) entre une station fixe (FS11, FS12, FS13, FS14, FS21, FS22, FS31) et une station de radio mobile (MS1 ... MSn),
**caractérisé en ce que** les moyens (M1 ... Mk) sont alors prévus pour transférer une communication existante (V1 ... Vn) entre une station fixe (FS21, FS22 ; FS31) et la station de radio mobile (MS1 ... MSn) en fonction de la durée (Ta) de séjour de la station de radio mobile (MS1 ... MSn) dans une zone de portée radio (Z11, Z12, Z13, Z14 ; Z11, Z12, Z13, Z14, Z21, Z22) lorsqu'on prévoit une propagation vers une station de radio (FS11, FS12, FS13, FS14 ; FS11, FS12, FS13, FS14, FS21, FS22) d'un niveau inférieur de la hiérarchie de cellules,
et **en ce que** les moyens (M1 ... Mk) sont alors prévus pour transférer une communication existante (V1 ... Vn) entre une station fixe (FS11, FS12, FS13, FS14 ; FS21, FS22) et la station de radio mobile (MS1 ... MSn) en fonction de la durée (Tv) de la communication lorsqu'on prévoit une propagation vers une station de radio (FS21, FS22 ; FS31) d'un niveau supérieur de la hiérarchie de cellules.

12. Equipement de commande selon la revendication 11, **caractérisé en ce que** les moyens (M1 ... Mk) sont alors prévus pour transférer une communication existante (V1 ... Vn) entre une station fixe (FS21, FS22 ; FS31) et une station de radio mobile (MS1 ... MSn) en fonction de la durée (Ta) de séjour de la station de radio mobile (MS1 ... MSn) dans une zone de portée radio (Z11, Z12, Z13, Z14 ; Z11, Z12, Z13, Z14, Z21, Z22) lorsque la durée de séjour (Ta) dépasse une première valeur pouvant être prédéfinie.

13. Equipement de commande selon la revendication 11 ou 12, **caractérisé en ce que** les moyens (M1 ... Mk) sont alors prévus pour transférer une communication existante (V1 ... Vn) entre une station fixe (FS11, FS12 ; FS21, FS22) et une station de radio mobile (MS1 ... MSn) en fonction de la durée (Tv) de la communication lorsque la durée (Tv) de la communication passe au-dessous d'une deuxième valeur pouvant être prédéfinie.

14. Equipement de commande selon l'une des revendications 11 à 13, **caractérisé en ce que** l'équipement de commande (S) présente d'autres moyens (22) pour la transmission d'une communication (V1 ... Vn) en fonction de critères pouvant être prédéfinis, en particulier de critères de niveau, de distance et/ou de qualité.

15. Equipement de commande selon l'une des revendications 11 à 14, **caractérisé en ce que** l'équipement de commande (S) présente des moyens de marquage d'une attribution des stations fixes (FS11, FS12, FS13, FS14, FS21, FS22, FS31) du système radiotéléphonique mobile à au moins deux niveaux hiérarchiques.

16. Procédé pour transférer une communication existante (V1 ... Vn) entre une station fixe (FS11, FS12, FS13, FS14, FS21, FS22, FS31) et une station de radio mobile (MS1 ... MSn) dans un système radiotéléphonique mobile avec au moins deux niveaux d'une hiérarchie de cellules,
**caractérisé en ce que** la propagation d'une communication existante (V1 ... Vn) entre une station fixe (FS21, FS22 ; FS31) et la station de radio mobile (MS1 ... MSn) se produit en fonction de la durée (Ta) de séjour de la station de radio mobile (MS1 ... MSn) dans une zone de portée radio (Z11, Z12, Z13, Z14 ; Z11, Z12, Z13, Z14, Z21, Z22) pour la propagation vers une station de radio (FS11, FS12, FS13, FS14 ; FS11, FS12, FS13, FS14, FS21, FS22) d'un niveau inférieur de la hiérarchie de cellules,
et **en ce que** la propagation d'une communication existante (V1 ... Vn) entre une station fixe (FS11, FS12, FS13, FS14 ; FS21, FS22) et la station de radio mobile (MS1 ... MSn) se produit en fonction de la durée (Tv) de la communication pour la propagation vers une station de radio (FS21, FS22 ; FS31) d'un niveau supérieur de la hiérarchie de cellules.

17. Procédé selon la revendication 16, **caractérisé en ce que** la propagation d'une communication existante (V1 ... Vn) entre une station fixe (FS21, FS22 ; FS31) et une station de radio mobile (MS1 ... MSn) se produit alors en fonction de la durée (Ta) de séjour de la station de radio mobile (MS1 ... MSn) dans une zone de portée radio (Z11, Z12, Z13, Z14 ; Z11, Z12, Z13, Z14, Z21, Z22) lorsque la durée de séjour (Ta) dépasse une première valeur pouvant être prédéfinie.

18. Procédé selon la revendication 16 ou 17, **caractérisé en ce que** la propagation d'une communication existante (V1 ... Vn) entre une station fixe (FS11, FS12 ; FS21, FS22) et une station de radio mobile (MS1 ... MSn) se produit alors en fonction de la durée (Tv) de la communication lorsque la durée (Tv) de la communication passe au-dessous d'une deuxième valeur pouvant être prédéfinie.

19. Procédé selon l'une des revendications 16 à 18, **caractérisé en ce que** la transmission d'une communication (V1 ... Vn) se produit en fonction de critères pouvant être prédéfinis, en particulier de critères de niveau, de distance et/ou de qualité.

20. Procédé selon l'une des revendications 16 à 19, **caractérisé en ce que** les stations fixes (FS11, FS12, FS13, FS14, FS21, FS22, FS31) du système radiotéléphonique mobile correspondent à au moins deux niveaux hiérarchiques.
